# EUROPÄISCHE PATENTSCHRIFT

(11) **EP 2 574 184 B1**
(45) Veröffentlichungstag und Bekanntmachung des Hinweises auf die Patenterteilung: **14.05.2014**
(21) Anmeldenummer: 11757586.0
(22) Anmeldetag: 05.09.2011
(51) Int. Cl.: B66C 7/04, B66C 7/02, F16M 13/00

(54) **ANORDNUNG AUS EINER AUFHÄNGUNG UND EINER SCHIENE**
ARRANGEMENT OF A SUSPENSION AND A RAIL
ARRANGEMENT COMPOSÉ D'UNE SUSPENSION ET D'UN RAIL

(30) Priorität: 14.09.2010 DE 102010037521
(43) Veröffentlichungstag der Anmeldung: 03.04.2013
(73) Patentinhaber: Demag Cranes & Components GmbH, 58300 Wetter (DE)
(72) Erfinder: SPIES, Gerd, 58313 Herdecke (DE); FITZLER, Stefan, 58636 Iserlohn (DE); MÜLLER, Sven, 58339 Breckerfeld (DE)
(74) Vertreter: Moser & Götze
(86) Internationale Anmeldenummer: PCT/EP2011/065331
(87) Internationale Veröffentlichungsnummer: WO 2012/034894

(56) Entgegenhaltungen:
- EP-A1- 1 205 420
- EP-B1- 1 928 777
- DE-A1- 10 115 565
- GB-A- 2 458 135
- US-A- 5 598 785
- ABUS Kransysteme GmbH: "HB-System", , 1. Oktober 2011 (2011-10-01), XP55013462, Gefunden im Internet: URL:http://www.abus-kransysteme.de/var/abu s/storage/original/application/2b758f5a7f3 67f6d123b4367c7f16329.pdf [gefunden am 2011-11-28]

## Beschreibung

Die Erfindung betrifft eine Anordnung aus einer Aufhängung und aus einer Schiene, insbesondere zum Aufhängen einer Fahr- und/oder Tragschiene einer Hängebahn, eines Hängeförderers oder eines Hebezeugs an einem Fahrwerk oder Tragwerk, mit einem Zugelement, das mit einem Ende über eine Halterung die Schiene im Bereich eines Profilkopfs trägt, der im Querschnitt gesehen im Wesentlichen c-förmig ist und oben einen entlang einer Längsmittelebene der Schiene verlaufenden Spalt ausbildet.

Aus der europäischen Patentschrift EP 1 928 777 B1 ist eine Vorrichtung zum Aufhängen einer Schiene bekannt, die insbesondere zum Aufhängen einer Fahrschiene eines Hängeförderers oder eines Hebezeugs an einem Fahrwerk oder einem Tragwerk dient. Die Vorrichtung weist ein Zugelement auf, das mit einem Ende über eine Halterung die Schiene trägt. Die Halterung hat ein sich erweiterndes und sich zumindest teilweise in Längsrichtung der Schiene erstreckendes Tragelement, das einen Y-förmigen Profilkopf der Schiene von außen klammernd umgreift. Das Tragelement kann einfach an jeder beliebigen Stelle der Schiene montiert werden. Hierfür werden Halteteile des Tragelements zusammengesetzt und mittels Schrauben mit dem Y-förmigen Profilkopf verklemmt. Hierbei weist das Zugelement eine untere Bohrung für einen Bolzen auf, der mit der Halterung befestigt ist. Der Bolzen ist durch die untere Bohrung hindurch gesteckt und über ein kugelartiges Gelenk, insbesondere über ein Gelenklager, an dem Zugelement gelagert. In dem Ausführungsbeispiel der Figuren 11 bis 13 ist eine Aufhängung beschrieben, bei der die Halterung aus einem rahmenförmigen Halteteil besteht, das von einem Ende in eine T-förmige Nut der Schiene eingeschoben wird. Alternativ ist vorgesehen, dass das Halteteil von oben auf den Schienenkopf aufgesetzt wird und an dem Halteteil befestigte Nutensteine dann von oben in die T-förmige Nut hinein ragen und dann um 90 Grad gedreht, damit die Nutensteine teilweise unter die oberen Stege der T-förmigen Nut greifen.

Auch sind Aufhängungen von der Demag Cranes & Components GmbH im Rahmen ihres sogenannten KBK III Systems bekannt, die von oben in eine Längsöffnung eines oben offenen C-förmigen Profilkopfes einer Schiene her eingeführt werden können. Dazu wird eine Tragplatte der Aufhängung um 90 Grad verdreht durch die Längsöffnung eingeführt und anschließend um 90 Grad zurückverdreht, so dass nach Art eines Nutensteins die Enden der Tragplatte nun die Längsöffnung begrenzende Stegenden des Profilkopfes hintergreifen. Anschließend wird die Tragplatte durch Verschrauben mit einer außen anliegenden Gegenplatte gegen ein Zurückdrehen und ein Verschieben in Längsrichtung der Längsöffnung fixiert. Diese Art der Aufhängung erlaubt eine freie und nachträgliche Anbringung der Aufhängung an der Schiene ohne Demontage der Schiene.

Weiterhin offenbart z.B. die DE 10115565 A1 eine Anordnung gemäß dem Oberbegriff des Anspruchs 1.

Der Erfindung liegt die Aufgabe zu Grunde, eine Anordnung aus einer Aufhängung und aus einer Schiene, insbesondere zum Aufhängen einer Fahr- und/oder Tragschiene einer Hängebahn, eines Hängeförderers oder eines Hebezeugs an einem Fahrwerk oder Tragwerk, zu schaffen, die eine einfache Montage mit einer hohen Sicherheit und hoher Tragkraft verbindet und die gleichzeitig eine freie und nachträgliche Platzierung an der Schiene ohne Demontage der Schiene erlaubt.

Diese Aufgabe wird durch die in Anspruch 1 wiedergegebene Anordnung gelöst. Vorteilhafte Ausgestaltungen der Erfindung sind in den Ansprüchen 2 bis 8 angegeben.

Erfindungsgemäß wird bei einer Anordnung aus einer Aufhängung und aus einer Schiene, insbesondere zum Aufhängen einer Fahr- und/oder Tragschiene einer Hängebahn, eines Hängeförderers oder eines Hebezeugs an einem Fahrwerk oder Tragwerk, mit einem Zugelement, das mit einem Ende über eine Halterung die Schiene im Bereich eines Profilkopfs trägt, der im Querschnitt gesehen im Wesentlichen c-förmig ist und oben einen entlang einer Längsmittelebene der Schiene verlaufenden Spalt ausbildet, eine einfache Montage mit einer hohen Sicherheit und hoher Tragkraft verbindet und die gleichzeitig eine freie und nachträgliche Platzierung an der Schiene ohne Demontage der Schiene erlaubt, dadurch erreicht, dass die Halterung ein gegenüber dem Zugelement schwenkbares Einschwenkteil aufweist, der Profilkopf und das Einschwenkteil derart dimensioniert sind, dass das Einschwenkteil durch den Spalt in einer Einschwenkstellung von außen in den Profilkopf einführbar und in eine Haltestellung schwenkbar ist, in der das Einschwenkteil den Spalt überbrückend von innen an dem Profilkopf anliegt. Hierdurch wird erreicht, dass sich die Aufhängung in eine entsprechende Schiene durch den Spalt in den hohlen Profilkopf einschwenken lässt, um das schwenkbare Einschwenkteil der Aufhängung aufzunehmen. Somit wird bei entsprechender auf einander abgestimmter Dimensionierung des Profilkopfes und der Aufhängung bzw. deren Einschwenkteils der Profilkopf auf einfache Weise in Querrichtung durch Formschluss mit größtmöglicher Auflagefläche gehalten.

Ein wesentlicher Vorteil besteht zudem darin, dass die Aufhängung nun vormontiert werden kann, bevor sie in die Schiene eingeführt wird. Sie muss nun nicht in der Schiene zusammengesetzt werden, was aufgrund des zur Verfügung stehenden geringen Raums schwierig ist bzw. unmöglich ist und gegebenfalls dazu Spezialwerkzeug notwendig wäre.

Zudem erlaubt diese Art der Aufhängung eine Positionierung an jeder Stelle der Schiene auch nach deren Montage.
In einer bevorzugten Ausführungsform ist das Einschwenkteil in der Haltestellung im Wesentlichen horizontal und in der Einschwenkstellung im Wesentlichen vertikal ausgerichtet.

Wenn dass das Einschwenkteil im Querschnitt gesehen bogenförmig ausgebildet ist, d.h. konkav bzw. bananenförmig nach oben gebogen ist, insbesondere in Aufhängungsrichtung gesehen nach oben, kann es in der Haltestellung sicher den Profilkopf hintergreifen.

Der Einschwenkvorgang wird dadurch erleichtert, da das Einschwenkteil um einen in dem Zugelement in Längsrichtung der Schiene gelagerten Bolzen schwenkbar angeordnet ist.

Eine einfache Bauweise verbunden mit einer Winkelbeweglichkeit der Aufhängung wird dadurch erreicht, dass der Bolzen über ein kugelartiges Gelenk, insbesondere über ein Gelenklager, an dem Zugelement befestigt ist. Somit kann der Bolzen direkt mit der Halterung verbunden werden und die Bauhöhe der gesamten Aufhängung wird minimiert. Diese direkte Verbindung erhöht die Sicherheit der Aufhängung. Die Verwendung eines Gelenklagers ermöglicht, hohe Standzeiten zu erreichen. Die Bauweise wird vereinfacht, da handelsübliche, industriell gefertigte Gelenklager verwendet werden können, die entsprechend verschleißarm sind.

Unter einem Gelenklager werden handelsübliche, einbaufertige, genormte und industriell gefertigte Radial-Gelenklager beispielsweise nach DIN ISO 12240 verstanden, die gelenkig sind und räumliche Einstellungen erlauben. Gelenklager sind Baueinheiten, die einen Außenring aufweisen, in dem ein Innenring gelagert ist. Der Innenring weist eine zylindrische Bohrung zur drehfesten Aufnahme eines Bolzens auf und eine kugelige Außengleitbahn zur Bildung des Kugelkopfs. Diese Außengleitbahn steht im Eingriff mit einer hohlkugeligen Innengleitbahn des Außenrings, der mit seiner zylindrischen Mantelfläche in eine Bohrung drehfest eingesetzt wird. Hierbei können die Außengleitbahn und die Innengleitbahn jeweils aus Stahl sein und im direkten Zustand zueinander stehen. Dann ist zumeist zusätzlich eine Schmiermittelzufuhr vorgesehen. Für den vorliegenden Einsatzfall werden Gelenklager eingesetzt, die zwischen Innen- und Außenring eine Gleitschicht beziehungsweise einen Gleitring beispielsweise aus Kunststoff oder Teflon aufweisen. Dieser Gleitring ist dann an dem Außenring befestigt und der Innenring gleitet in dem Gleitring. Bei einer anderen Bauweise kann der Außenring als gesondertes Bauteil weg gelassen werden und dessen Funktion wird von dem Zugelement übernommen. Der Innenring wird dabei quer in die erweiterte Bohrung in dem Zugelement eingefügt und um 90° in der Bohrung in seine Arbeitsposition gedreht. Anschließend wird die Erweiterung der Bohrung und der Spalt zwischen Innenring und Bohrung mit einem den Gleitring bildenden aushärtenden Kunststoff verfüllt.

Besonders vorteilhaft ist, dass die Aufhängung ein rahmenartiges Widerlager aufweist, das im Querschnitt gesehen bogenförmig ausgebildet ist und von außen auf den Profilkopf aufgesetzt und mit dem Einschwenkteil in der Haltestellung verschraubt ist. Hierdurch wird das Einschwenkteil in Längsrichtung der Schiene gesehen gegen Verschieben gesichert und auch das Einschwenkteil sicher in der horizontalen Haltestellung gehalten.

Da der Profilkopf den Spalt beidseitig mit ersten Stegabschnitten begrenzt, die von der Längsmittelebene aus gesehen schräg nach außen und oben verlaufen und das Einschwenkteil in die durch die ersten Stegabschnitte so gebildeten Sicken des Profilkopfs eingreift, d.h. im Wesentlichen etwa V-förmig angeordnet sind und nicht wie im Stand der Technik etwa horizontal in Richtung der vertikalen Längsmittelebene zurückkragen, verhindern sie, dass sich das Schienenprofil selbst bei extremer Überbelastung aufbiegt. Somit kommt es bei Überlast sogar zu einer Verstärkung der Klemmwirkung auf das im Spalt angeordnete Schwenkteil der Aufhängung, da die ersten Stegabschnitte bei Überlast aufeinander zu "gezogen" werden. Dieser Effekt wird durch die bogenförmige Ausgestaltung des Einschwenkteils verstärkt. Dies ist wichtig, da auch im Überlastfall kein Versagen der Verbindung zwischen der Schiene beziehungsweise deren Kopfprofils und der Aufhängung beziehungsweise dessen Verbindungselement auftreten darf. Durch die besondere Geometrie des Profilkopfs der erfindungsgemäßen Schiene wird sichergestellt, dass die Schiene nicht das schwächste Glied in der Kette ist.

Wenn der Profilkopf im Querschnitt gesehen zwei gegenüberliegende nach unten und außen verlaufende zweite Stegabschnitte, die sich an die ersten Stegabschnitte anschließen, sowie abschließend nach innen in Richtung der vertikalen Längsmittelebene zurückkragende dritte Stegabschnitte, die sich an die zweiten Stegabschnitte anschließen, aufweist, d.h. der Profilkopf an der Basis breiter ist und sich in Richtung weg von dem Profilkörper verschmälert, kann eine Aufhängung für die Schiene verwendet werden, die sich durch den Spalt in den hohlen Profilkopf "einschwenken" lässt, da somit die diagonale Erstreckung (im Querschnitt gesehen) groß genug ist, um einen Einschwenkteil einer Aufhängung aufzunehmen, das anschließend etwa waagerecht geschwenkt wird und dabei formschlüssig in die durch die ersten Stegabschnitte gebildeten Sicken des Profilkopfs eingreift. Somit wird bei entsprechender auf einander abgestimmter Dimensionierung des Profilkopfes und der Aufhängung bzw. deren Einschwenkteils der Profilkopf auf einfache Weise in Querrichtung durch Formschluss gehalten.

Die erfindungsgemäße Anordnung aus Aufhängung und Schiene können in vielfältiger Weise verwendet werden. Besonders bevorzugt ist aber die Verwendung als Laufschiene und/oder Tragschiene für Ein- oder Zweiträgerhängekrane.

Weitere Einzelheiten, Merkmale und Vorteile der Erfindung ergeben sich aus der nachfolgenden Beschreibung eines Ausführungsbeispiels anhand der Zeichnung. Es zeigen:
Fig. 1 eine perspektivische und schematische Ansicht eines Einträgerhängekrans nach dem Stand der Technik zur Veranschaulichung der Einsatzmöglichkeiten entsprechender Schienen;
Fig. 2 eine perspektivische Ansicht einer erfindungsgemäßen Schiene;
Fig. 3 einen Querschnitt durch die Schiene aus Figur 2 und
Fig. 4 einen Querschnitt durch die Schiene aus Figur 2 im Bereich der Aufhängung des Profilkopfs sowie
Fig. 5 den Querschnitt aus Figur 4 beim Einführen der Aufhängung und
Fig. 6 eine perspektivische Explosionsansicht einer alternativen Ausgestaltung der Aufhängung an einer Figur 2 entsprechenden Schiene.

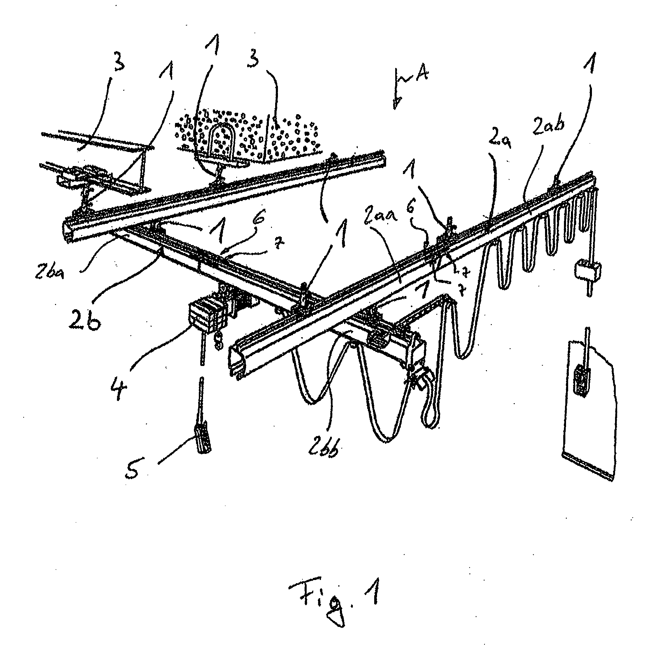

Zur Veranschaulichung der unterschiedlichsten Verwendungsmöglichkeiten von verbundenen Schienenabschnitten zur Ausbildung von Schienen ist in der Figur 1 ein Einträgerhängekran gezeigt.

Mittels Aufhängevorrichtungen 1 sind im Wesentlichen horizontal verlaufende und nach unten offene c-förmig profilierte Schienen 2 an Tragelementen 3 oder weiteren Schienen 2 aufgehängt. Die Tragelemente 3 sind als Doppel-T-Träger ausgebildet. Da das vorliegende Ausführungsbeispiel einen Einträgerhängekran betrifft, sind zwei im Wesentlichen horizontal, parallel und mit Abstand zueinander verlaufende erste Schienen 2a vorgesehen, die als Fahrschienen des Einträgerhängekrans dienen, und eine zweite Schiene 2b, die eine Kranschiene bildet, die im Wesentlichen quer zu den ersten Schienen 2a ausgerichtet und entlang der ersten Schienen 2a verfahrbar ist. Hierzu ist die zweite Schiene 2b über zwei Aufhängevorrichtungen 1 jeweils an einem nicht dargestellten und entlang der ersten Schienen 2a verfahrbarem Fahrwerk aufgehängt. An der zweiten Schiene 2b ist in üblicher Weise ein Hebezeug 4 wie ein Ketten- oder Seilzug aufgehängt und mit einem weiteren nicht dargestellten Fahrwerk entlang der zweiten Schiene 2b verfahrbar. Das Hebezeug 4 ist über einen an dem Hebezeug 4 aufgehängten Hängeschalter 5 steuerbar.

Die Schienen 2a, 2b können also wahlweise als Kranbahn- oder Trägerschienen verwendet werden.

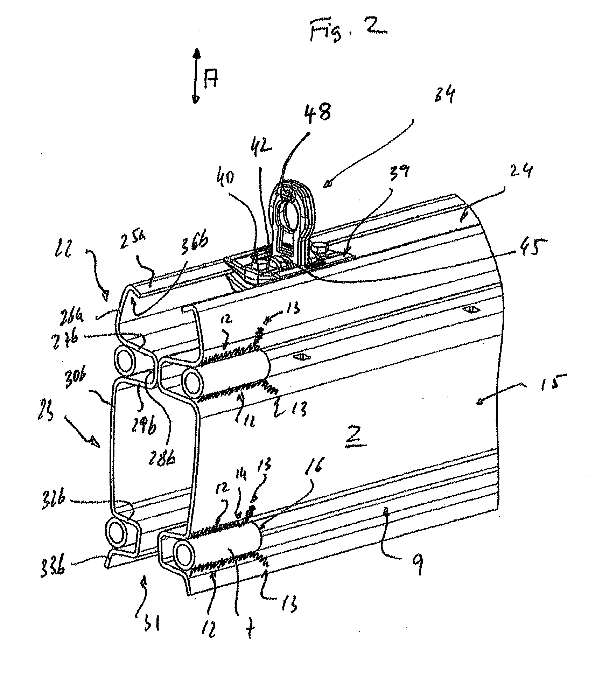

Anhand der Figuren 2 bis 5 wird nun eine erfindungsgemäße Schiene 2 bzw. eine erste Aufhängung beschrieben.

Die Schienen 2a und 2b bestehen jeweils je nach Längenanforderung aus zwei oder mehreren Schienenabschnitten 2aa und 2ab bzw. 2ba und 2bb.

Die Schienenabschnitte 2aa und 2ab bzw. 2ba und 2bb sind über stirnseitige Stoßverbindungen 6 miteinander verbunden.

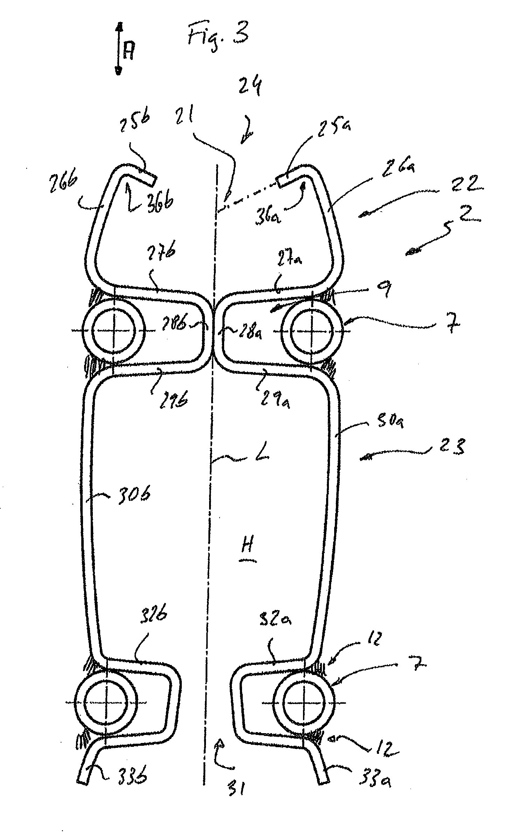

Nach folgend wird beispielhaft lediglich die Stoßverbindung 6 der Schienenabschnitte 2aa und 2ab anhand von Figuren 2 und 3 erläutert, da diejenige der Schienenabschnitte 2ba und 2bb entsprechend ausgebildet ist. Das Profil der Schienenabschnitte der Figuren 2 und 3 ist dabei lediglich demjenigen der Figur 1 ähnlich, aber nicht identisch.

Zur Ausbildung der Stoßverbindungen 6 der Schienenabschnitte 2aa und 2ab weisen die Schienenabschnitte 2aa und 2ab jeweils an ihren Außenseiten als Hülsen 7 ausgebildete Haltelemente auf, die an den Schienenabschnittenden 8 in längs verlaufenden Winkelräumen bzw. Nuten 9 der Schienenabschnitte 2aa und 2ab angeordnet sind.

Im dargestellten Beispiel werden vier Hülsen 7 pro Schienenabschnitt verwendet, die jeweils in entsprechenden Längsnuten 9 angeordnet sind. Dabei sind pro Schienenabschnittlängsseite je zwei Hülsen 7 vorgesehen.

Die Hülsen 7 werden von Schraubbolzen als Verbindungselemente durchgriffen und bilden für deren Köpfe bzw. deren Muttern eine quer zur Längsrichtung der Schienenabschnitte verlaufende Anlagefläche 16 als Widerlagerfläche aus.

Die Hülsen 7 sind an den Schienenabschnitten 2aa und 2ab jeweils durch eine in Längsrichtung des Schienenabschnitts 2aa und 2ab verlaufende Schweißnaht 12 auf jeder der beiden Längsseiten der Hülsen 7 befestigt. Die Schweißnähte 12 müssen sich dabei nicht über die gesamte Länge der Hülsen 7 erstrecken und können von einander unterschiedlich ausgebildet sein.

Das von der Stirnseite abgewandte Ende 13 der Schweißnaht 12 weicht dabei von der Längsrichtung ab. Dabei bildet das Ende 13 zu der restlichen Schweißnaht 12 einen Winkel 14 aus und erstreckt sich aus der Nut 9 heraus bis auf die Seitenfläche 15 des Schienenprofils beziehungsweise der fortgeführten Profilwandung.

Die Schiene 2 besteht im Querschnitt aus zwei symmetrisch zur vertikalen Längsmittelebene L angeordneten identischen Profilen 20a, 20b

Die Schiene weist dabei einen relativ entlang der Längsmittelebene L oben angeordneten Profilkopf 22 und einen damit verbundenen unterhalb liegenden Profilkörper 23 auf.

Der Profilkopf 22 ist im Querschnitt gesehen ein im Wesentlichen C-förmiger nach oben offener Profilkopf, dessen Öffnung einen entlang der Längsmittelebene L verlaufenden Spalt 24 ausbildet, der beidseitig von ersten Stegabschnitten 25a, 25b begrenzt ist, die sich von der Längsmittelebene L aus gesehen schräg nach außen und gleichzeitig oben erstrecken.

Der Winkel 21 der Stegabschnitte 25a, 25b beträgt etwa 25 Grad relativ zu der Längsmittelebene L.

Der Profilkopf 22 weist ferner im Querschnitt zwei gegenüberliegende nach unten und außen verlaufende zweite Stegabschnitte 26a, 26b, die sich an die ersten Stegabschnitte 25a, 25b anschließen, sowie abschließend nach innen in Richtung der vertikalen Längsmittelebene L zurückkragende dritte Stegabschnitte 27a, 27b, die sich an die zweiten Stegabschnitte 26a, 26b anschließen, auf.

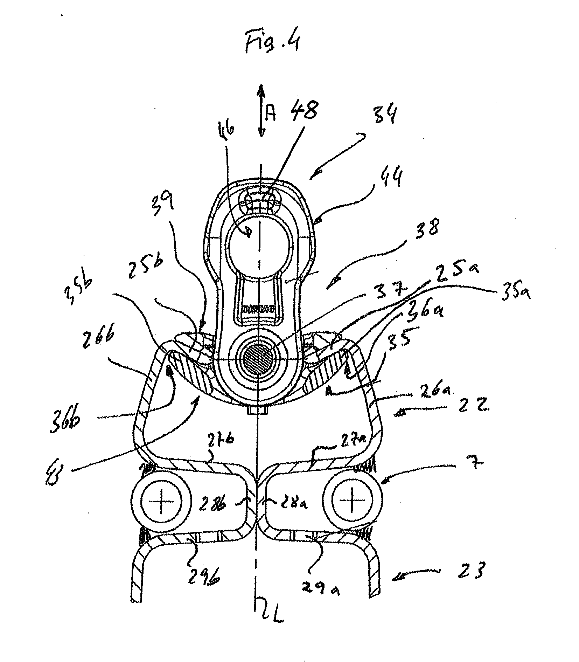

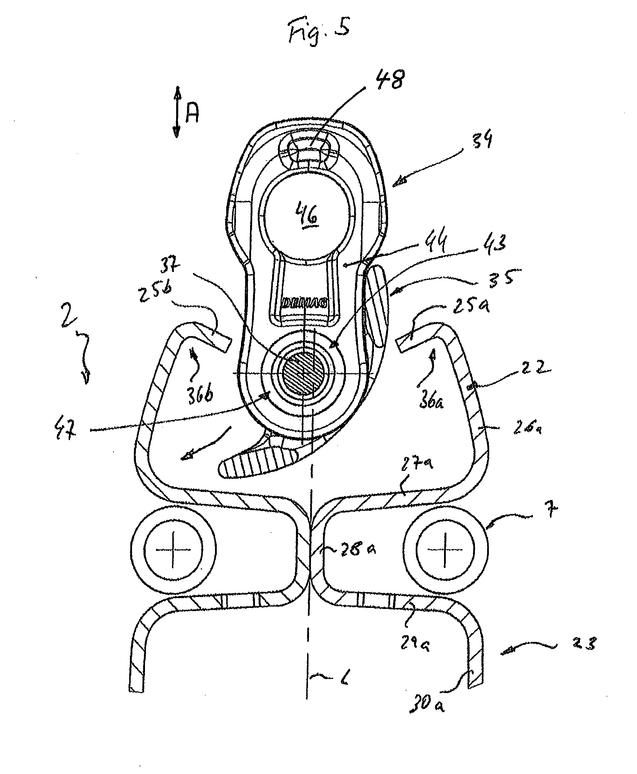

D.h. der Profilkopf 22 ist an seiner Basis breiter und verschmälert sich in Richtung weg von dem Profilkörper 23. So kann eine Aufhängung 34 für die Schiene 2 verwendet werden, die sich durch den Spalt 24 in den hohlen Profilkopf 22 "einschwenken" lässt (vgl. Figuren 4 und 5), da somit die diagonale Erstreckung (im Querschnitt gesehen) groß genug ist, um einen schwenkbaren Einschwenkteil 35 der Aufhängung 34 aufzunehmen, das anschließend etwa waagerecht geschwenkt wird und dabei formschlüssig in die durch die ersten Stegabschnitte 25a, 25b gebildeten Sicken 36a, 36b des Profilkopfs 22 eingreift. Somit wird bei entsprechender auf einander abgestimmter Dimensionierung des Profilkopfes 22 und der Aufhängung 23 bzw. deren Einschwenkteils 25 der Profilkopf 22 auf einfache Weise in Querrichtung durch Formschluss gehalten.

Alternativ müsste die Höhe des Profilkopfs 22 wesentlich größer ausfallen und die Schiene 2 könnte insgesamt weniger kompakt und steif ausgebildet werden.

Um die Aufhängung 34 an dem Profilkopf 22 zu befestigen und zu fixieren, wird zunächst das erwähnte Einschwenkteil 35 etwa senkrecht an der Aufhängung einseitig anliegend geschwenkt, so dass es mit der anderen Seite in den Spalt 24 eingeführt werden kann.

Anschließend wird die Aufhängung 34 mit dem Einschwenkteil 35 schräg in eine der unteren Ecken des Profilkopfs 22 geschoben, die durch die Stegabschnitte 26a, 27a beziehungsweise 26b, 27b ausgebildet werden.

Dann ist es möglich, das andere Ende des Einschwenkteils 35 an dem Stegabschnitt 25a beziehungsweise 25b vorbei in den Spalt 24 einzuführen und abschließend das Einschwenkteil waagerecht zu schwenken und in die Sicken 36a, 36b einzuführen. Damit das Einschwenkteil 35 mit seinen Enden 35a, 35b formschlüssig in die Sicken 36a, 36b eingreift bzw. anliegt, ist es im Querschnitt gesehen (Figuren 4 und 5) bogenförmig ausgestaltet.

Somit trägt die Aufhängung 34 bereits die Schiene 2 über das Einschwenkteil 35 ohne eine Verschraubung etc. Somit wird die gesamte Belastung von dem Schwenkbolzen 37 der Aufhängung aufgenommen, der wesentlich belastbarer dimensioniert werden kann als ein normaler Schraubbolzen einer Klemmverbindung aus dem Stand der Technik.

Die Halterung 38 besteht zusätzlich zu dem Schwenkteil 35 aus einem rahmenförmigen ebenfalls gebogenem Widerlager 39. Um das Schwenkteil 35 in Längsrichtung der Schiene 2 an einer gewünschten Stelle festzulegen, wird das Schwenkteil 35 über Schrauben 40 nach oben gezogen und stützt sich somit an der Unterseite der Stegabschnitte 25a, 25b beziehungsweise Sicken 36a, 36b ab. Die Schrauben 40 stützen sich an der Oberseite der Stegabschnitte 25a, 25b auf dem Widerlager 39 ab. Somit wird die Halterung 38 an den Stegabschnitten 25a, 25b festgeklemmt. Sollten die Schrauben 40 versagen, bleibt die Schiene 2 über das Schwenkteil 35 gehalten.

Das Schwenkteil 35 kann in einen Haltebereich 41 und einen daran anschließenden Aufhängebereich 42 aufgeteilt werden. Der Aufhängebereich 42 besteht im Wesentlichen aus zwei Bohrungen für die Aufnahme des Bolzens 37, die über einen Zwischenraum beabstandet sind, in den ein Gelenklager 43 mit dem Zugelement 44 eintaucht. Auch weist der Zwischenraum hineinragende Vorsprünge auf, um das Gelenklager zu zentrieren. Der sich durch die beiden Bohrungen und das Gelenklager 43 hindurch erstreckende Bolzen 37 weist an einem Ende einen Kopf auf, der über eine Aussparung in dem Widerlager 39 verdreh gesichert gehalten und in der Bohrung gehalten wird. Im Bereich der Bohrungen ist das Schwenkteil 35 nach Art von Lagerböcken 45 nach oben verdickend ausgebildet. Diese Lagerböcke 45 ragen nach oben aus dem Spalt 24 hinaus und bilden die eigentlichen Aufnahmen für den Bolzen 37 aus.

Das Zugelement 44 ist als flache Lasche pleuelartig beziehungsweise streifenförmig ausgebildet und etwa senkrecht zur Längsrichtung der Schiene 2 ausgerichtet. Dieses Zugelement 44 weist eine obere Bohrung 46 und eine untere Bohrung 47 auf. Das Zugelement 44 ist über einen Haken, Öse etc. an einem Fahrwerk oder Träger aufgehängt. Die obere Bohrung 46 weist eine Schneidenlagerung auf, d. h. die Bohrung 46 ist ballig ausgeführt und der Bolzen ist winkelbeweglich auf der durch Balligkeit gebildeten Schneide punktförmig geführt. Alternativ kann in der oberen Bohrung auch ein Gelenklager angeordnet werden.

Die untere Bohrung 47 dient zur Aufhängung der Schiene 2 an dem Zugelement 44. Hierfür ist in der unteren Bohrung 47 das Gelenklager 43 eingesetzt, durch dessen Bohrung der Bolzen 37 durchgeführt ist. Die in die jeweilige Längsrichtung der Schiene 2 über das Zugelement 44 beziehungsweise das Gelenklager 43 hinaus stehenden Enden des Bolzens 37 greifen in die Lagerböcke 45 ein und werden dort verdrehfest in Bohrungen gehalten.

Das Zugelement 44 weist beidseitig der oberen Bohrung 46 eine Nase 48 auf, so dass das Zugelement 44 am Fahrwerk, Träger etc. nicht trotz der schlanken Bauweise in dem Haken, Öse etc. schlackert.

Zusätzlich sind vierte etwa entlang der Längsmittelebene L verlaufende Stegabschnitte 28a, 28b an dem Profilkopf 22 vorgesehen, die sich an die dritten Stegabschnitte 27a, 27b anschließen und den Profilkopf 22 mit dem Profilkörper 23 über dessen obere Profilwandungen 29a, 29b verbinden.

Die vierten Stegabschnitte 28a, 28b des Profilkopfes 22 liegen an einander an und sind dort miteinander verschweißt. Somit werden die Profile 20a, 20b zur Ausbildung der Schiene 2 verbunden.

Der Profilkörper 23 bildet mit oberen im Wesentlichen horizontal verlaufenden Profilwandungen 29a, 29b und leicht schräg nach unten zur Längsmittelebene L verlaufenden Profilseitenwänden 30a, 30b sowie zwei beiderseits eines unteren Schlitzes 31 liegenden, zu diesem leicht abwärts geneigten unteren Profilwandungen 32a, b einen Hohlraum H für Fahrwerke aus, wobei unteren Profilwandungen 32a, 32b eine Lauffläche für die entsprechenden Räder ausbilden. Zusätzlich kann im Bereich der oberen Profilwandungen 29a, 29b eine Schleifleitung angeordnet werden.

Die untere Profilwandung 32a, 32b am Schlitz 31 ist im Wesentlichen nach unten und dann schräg nach außen und abschließend schräg nach unten fortgeführt. Die so entstehenden Endabschnitte 33a, 33b der unteren Profilwandung 32a, 32b erlauben eine Herausführung der Schweißnaht 12, wie oben erläutert.

Der Winkel Endabschnitte 33a, 33b der unteren Profilwandung 32a, 32b beträgt etwa 110 Grad relativ zu der Horizontalen.

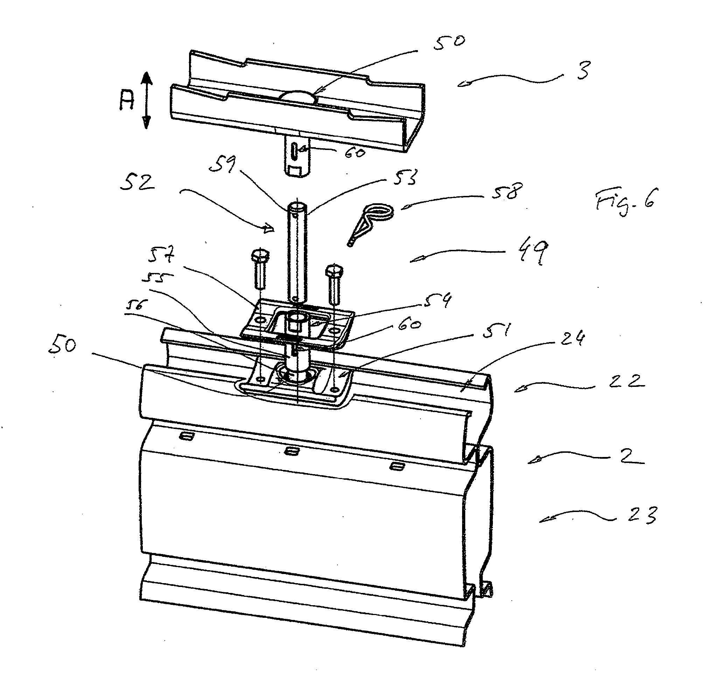

In der Figur 6 ist eine perspektivische Explosionsansicht einer alternativen Ausgestaltung der Aufhängung an einer Figur 2 entsprechenden Schiene dargestellt, so dass auf eine erneute Beschreibung der Schiene 2 verzichtet wird. Nachfolgend wird lediglich auf die Besonderheiten der alternativen Aufhängung 49 eingegangen.

In der dargestellten Alternative erfolgt die Befestigung der Aufhängung 49 mittels eines Kugelgelenks 50 an der Schiene 2 bzw. dem Tragwerk 3.

Zur Aufnahme des Kugelkopfes 50 bildet das Einschwenkteil 51 eine Kugelpfanne mit einer zentralen Öffnung für den Durchgriff des Zugelements 52 aus. Dabei ist das Einschwenkteil 51 um den Kugelkopf 50 anstelle des Bolzens 37 der obigen Ausführungsform schwenkbar.

Das Zugelement 52 ist stangenartig ausgebildet und umfasst drei Teile, nämlich eine in der Mitte angeordnete Gewindestange 53 und jeweils unten bzw. oben eine Gewindehülse 54 mit einstückig verbundenem Kugelkopf 50. Um die Schwenkbarkeit zu verbessern, weist die Gewindehülse 54 zwischen dem eigentlichen Hülsenteil 55 und dem Kugelkopf 50 einen zylindrischen Bereich 56 geringeren Durchmessers auf.

Das Einschwenken bzw. Einführen des Einschwenkteils 51 in den Profilkopf 22 erfolgt analog der obigen ausführungsform. Anschließend wird die Aufhängung 49 mit einem entsprechenden rahmenförmigen ebenfalls gebogenem Widerlager 57 in Längsrichtung der Schiene 2 am Spalt 24 fixiert.

Danach kann die Gewindestange 53 in die Gewindehülse 54 eingedreht werden und mit einem Sicherungsstift 58 gegen Verlust und Verdrehen gesichert werden.

Dazu weisen die Gewindestange 53 jeweils im oberen und unteren Bereich eine durchgehende Bohrung 59 und die Gewindehülsen 54 entsprechende Langlöcher 60 auf.

### Bezugszeichenliste

- 1: Aufhängevorrichtung
- 2: Schiene
- 2aa, 2ab, 2ba, 2bb: Schienenabschnitt
- 3: Tragelemente
- 4: Hebezeug
- 5: Hängeschalter
- 6: Stoßverbindung
- 7: Hülse
- 8: Schienenabschnittende
- 9: Nut
- 12: Schweißnaht
- 13: Ende der Schweißnaht
- 14: Winkel
- 15: Seitenfläche
- 16: Anlagefläche
- 20a, 20b: Profil
- 21: Winkel
- 22: Profilkopf
- 23: Profilkörper
- 24: Spalt
- 25a, 25b: erster Stegabschnitt
- 26a, 26b: zweiter Stegabschnitt
- 27a, 27b: dritter Stegabschnitt
- 28a, 28b: vierter Stegabschnitt
- 29a, 29b: obere Profilwandung
- 30a, 30b: Profilseitenwand
- 31: Schlitz
- 32a, 32b: untere Profilwandung
- 33a, 33b: Endabschnitt
- 34: Aufhängung
- 36a, 36b: Sicke
- 35: Einschwenkteil
- 37: Schwenkbolzen
- 38: Halterung
- 39: Widerlager
- 40: Schrauben
- 41: Haltebereich
- 42: Aufhängebereich
- 43: Gelenklager
- 44: Zugeelement
- 45: Lagerbock
- 46: Bohrung
- 47: Bohrung
- 48: Nase
- 49: Aufhängung
- 50: Kugelkopf
- 51: Einschwenkteil
- 52: Zugelement
- 53: Gewindestange
- 54: Gewindehülse
- 55: Hülsenteil
- 56: Bereich geringeren Durchmessers
- 57: Widerlager
- 58: Sicherungsstift
- 59: Bohrung
- 60: Langloch

- A: Aufhängerichtung
- H: Hohlraum
- L: Längsmittelebene

## Patentansprüche

1. Anordnung aus einer Aufhängung (34) und aus einer Schiene (2), insbesondere zum Aufhängen einer Fahr- und/oder Tragschiene einer Hängebahn, eines Hängeförderers oder eines Hebezeugs an einem Fahrwerk oder Tragwerk, mit einem Zugelement (44, 52), das mit einem Ende über eine Halterung (38) die Schiene (2) im Bereich eines Profilkopfs (22) trägt, der im Querschnitt gesehen im Wesentlichen c-förmig ist und oben einen entlang einer Längsmittelebene (L) der Schiene (2) verlaufenden Spalt (24) ausbildet, **dadurch gekennzeichnet, dass** die Halterung (38) ein gegenüber dem Zugelement (44, 52) schwenkbares Einschwenkteil (35, 51) aufweist, der Profilkopf (22) und das Einschwenkteil (35, 51) derart dimensioniert sind, dass das Einschwenkteil (35, 51) durch den Spalt (24) in einer Einschwenkstellung von außen in den Profilkopf (22) einführbar und in eine Haltestellung schwenkbar ist, in der das Einschwenkteil (35, 51) den Spalt (24) überbrückend von innen an dem Profilkopf (22) anliegt.

2. Anordnung nach Anspruch 1, **dadurch gekennzeichnet, dass** das Einschwenkteil (35, 51) in der Haltestellung im Wesentlichen horizontal und in der Einschwenkstellung im Wesentlichen vertikal ausgerichtet ist.

3. Anordnung nach Anspruch 1 oder 2, **dadurch gekennzeichnet, dass** das Einschwenkteil (35, 51) im Querschnitt gesehen bogenförmig ausgebildet ist.

4. Anordnung nach einem der Ansprüche 1 bis 3, **dadurch gekennzeichnet, dass** das Einschwenkteil (35) um einen in dem Zugelement (44) in Längsrichtung der Schiene (2) gelagerten Bolzen (37) schwenkbar angeordnet ist.

5. Anordnung nach Anspruch 4, **dadurch gekennzeichnet, dass** der Bolzen (37) über ein kugelartiges Gelenk, insbesondere über ein Gelenklager (43), an dem Zugelement (44) befestigt ist.

6. Anordnung nach einem der Ansprüche 1 bis 5, **dadurch gekennzeichnet, dass** die Aufhängung (34, 49) ein rahmenartiges Widerlager (39, 57) aufweist, das im Querschnitt gesehen bogenförmig ausgebildet ist und von außen auf den Profilkopf (22) aufgesetzt und mit dem Einschwenkteil (35) in der Haltestellung verschraubt ist.

7. Anordnung nach einem der Ansprüche 1 bis 6, **dadurch gekennzeichnet, dass** der Profilkopf (22) den Spalt (24) beidseitig mit ersten Stegabschnitten (25a, 25b) begrenzt, die von der Längsmittelebene (L) aus gesehen schräg nach außen und oben verlaufen und das Einschwenkteil (35, 51) in die durch die ersten Stegabschnitte (25a, 25b) so gebildeten Sicken (36a, 36b) des Profilkopfs (22) eingreift.

8. Anordnung nach Anspruch 6 oder 7, **dadurch gekennzeichnet, dass** der Profilkopf (22) im Querschnitt gesehen zwei gegenüberliegende nach unten und außen verlaufende zweite Stegabschnitte (26a, 26b), die sich an die ersten Stegabschnitte (25a, 25b) anschließen, sowie abschließend nach innen in Richtung der vertikalen Längsmittelebene (L) zurückkragende dritte Stegabschnitte (27a, 27b), die sich an die zweiten Stegabschnitte (26a, 26b) anschließen, aufweist.

## Claims

1. Arrangement comprising a suspension means (34) and a rail (2), in particular for suspending a travel rail and/or supporting rail of a suspended railway, a suspended conveyor or a lifting apparatus from a supporting structure or a travelling unit, having a member in tension (44, 52) which, at one end and via a mounting (38), carries the rail (2) in the region of a profiled head (22) which is substantially C-shaped when seen in cross-section and which at the top forms a gap (24) extending along a longitudinal centre plane (L) of the rail (2), **characterised in that** the mounting (38) has an part for pivoting in (35, 51) which is pivotable relative to the member in tension (44, 52), the profiled head (22) and the part for pivoting in (35, 51) are sized in such a way that, in a position for pivoting in, the part for pivoting in (35, 51) can be inserted in the profiled head (22) from outside through the gap (24) and can be pivoted to a retaining position in which the part for pivoting in (35, 51) rests against the profiled head (22) while bridging the gap (24) from the inside.

2. Arrangement according to claim 1, **characterised in that** the part for pivoting in (35, 51) is substantially horizontally aligned in the retaining position and substantially vertically aligned in the position for pivoting in.

3. Arrangement according to claim 1 or 2, **characterised in that** the part for pivoting in (35, 51) is of an arcuate form when seen in cross-section.

4. Arrangement according to one of claims 1 to 3, **characterised in that** the part for pivoting in (35, 51) is arranged to be pivotable about a pin (37) which is mounted in the member in tension (44) in the longitudinal direction of the rail (2)

5. Arrangement according to claim 4, **characterised in that** the pin (37) is fastened to the member in tension (44) by means of a spherical joint and in particular by means of a ball joint (43).

6. Arrangement according to one of claims 1 to 5, **characterised in that** the suspension means (34, 49) has a frame-like abutment piece (39, 57) which is of an arcuate form when seen in cross-section and which is placed down on the profiled head (22) from outside and is screwed or bolted to the part for pivoting in (35) in the retaining position.

7. Arrangement according to one of claims 1 to 6, **characterised in that** the profiled head (22) defines the gap (24), on the two sides, by first web portions (25a, 25b) which extend outwards and upwards when seen from the longitudinal plane (L), and the part for pivoting in (35, 51) engages in the channels (36a, 36b) in the profiled head (22) which are formed in this way by the first web portions (25a, 25b).

8. Arrangement according to claim 6 or 7, **characterised in that**, when seen in cross-section, the profiled head (22) has two second web portions (26a, 26b) situated opposite one another which extend outwards and downwards and which follow on from the first web portions (25a, 25b), and finally third web portions (27a, 27b) which are cantilevered back inwards towards the vertical longitudinal centre plane (L) and which follow on from the second web portions (26a, 26b).

## Revendications

1. Agencement constitué d'une suspension (34) et d'un rail (2), notamment pour la suspension d'un rail de roulement et/ou de support d'une voie suspendue, d'un convoyeur aérien ou d'un engin de levage au niveau d'un dispositif de roulement ou d'un dispositif de support, ledit agencement comportant un élément de traction (44, 52) qui supporte, par une extrémité via un support (38), le rail (2) dans la région d'une tête profilée (22) qui a sensiblement en coupe transversale la forme d'un C et qui forme en haut une fente (24) s'étendant le long d'un plan médian longitudinal (L) du rail (2), **caractérisé en ce que** le support (38) comporte une pièce insérable pivotante (35, 51) apte à pivoter par rapport à l'élément de traction (44, 52), **en ce que** la tête profilée (22) et la pièce insérable pivotante (35, 51) sont dimensionnées de telle sorte que la pièce insérable pivotante (35, 51) peut être insérée dans la fente (24) depuis l'extérieur jusque dans la tête profilée (22) dans une position pivotée d'insertion et est apte à pivoter pour venir dans une position de retenue dans laquelle la pièce insérable pivotante (35, 51) porte depuis l'intérieur sur la tête profilée (22) en se plaçant par-dessus la fente (24).

2. Agencement selon la revendication 1, **caractérisé en ce que** la pièce insérable pivotante (35, 51) est orientée sensiblement horizontalement dans la position de retenue et sensiblement verticalement dans la position d'insertion.

3. Agencement selon la revendication 1 ou 2, **caractérisé en ce que** la pièce insérable pivotante (35, 51) a une conformation incurvée en coupe transversale.

4. Agencement selon l'une des revendications 1 à 3, **caractérisé en ce que** la pièce insérable pivotante (35) est disposée de façon à pouvoir pivoter autour d'un boulon (37) monté dans l'élément de traction (44) dans la direction longitudinale du rail (2).

5. Agencement selon la revendication 4, **caractérisé en ce que** le boulon (37) est fixé à l'élément de traction (44) par l'intermédiaire d'une articulation sphérique, notamment d'une articulation à rotule (43).

6. Agencement selon l'une des revendications 1 à 5, **caractérisé en ce que** la suspension (34, 49) comprend une butée (39, 57) en forme de cadre qui a une conformation incurvée en coupe transversale, qui est placée depuis l'extérieur sur la tête profilée (22) et qui est vissée à la pièce insérable pivotante (35) dans la position de retenue.

7. Agencement selon l'une des revendications 1 à 6, **caractérisé en ce que** la tête profilée (22) borde la fente (24) sur deux côtés par des premières portions de nervure (25a, 25b) qui s'étendent obliquement vers l'extérieur et vers le haut lorsque l'on regarde depuis le plan médian longitudinal (L), et la pièce insérable pivotante (35, 51) s'engage dans les bords (36a, 36b), ainsi formés par les premières portions de nervure (25a, 25b), de la tête profilée (22).

8. Agencement selon la revendication 6 ou 7, **caractérisé en ce que** la tête profilée (22) comporte en coupe transversale deux deuxièmes portions de nervure (26a, 26b) opposées qui s'étendent vers le bas et vers l'extérieur et qui se raccordent aux premières portions de nervure (25a, 25b), et enfin des troisièmes portions de nervure (27a, 27b) qui rentrent en porte-à-faux vers l'intérieur en direction du plan médian longitudinal (L) vertical et qui se raccordent aux deuxièmes portions de nervure (26a, 26b).
